# EUROPÄISCHE PATENTSCHRIFT

(11) **EP 2 048 008 B1**
(45) Veröffentlichungstag und Bekanntmachung des Hinweises auf die Patenterteilung: **19.01.2011**
(21) Anmeldenummer: 08165959.1
(22) Anmeldetag: 07.10.2008
(51) Int. Cl.: B60G 17/0165, B60N 2/50

(54) **Fahrzeug mit gefedertem Fahrzeugsitz und gefederter Fahrzeugkabine sowie Federungsverfahren**
Vehicle with spring-loaded vehicle seat and spring-loaded vehicle cab and spring-loading method
Véhicule doté d'un siège de véhicule monté sur ressort et cabine de véhicule montée sur ressort ainsi que procédé de suspension à ressort

(30) Priorität: 08.10.2007 DE 102007048194
(43) Veröffentlichungstag der Anmeldung: 15.04.2009
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- EP-A- 0 739 766
- EP-A- 1 188 608
- EP-A- 1 987 970
- US-A- 5 732 370

## Beschreibung

Die Erfindung betrifft ein Fahrzeug mit gefedertem Fahrzeugsitz und mit einer gefederten Fahrzeugkabine, bei dem der Fahrzeugsitz mittels mindestens einem ersten Federelement und/oder einem ersten Dämpfungselement gegenüber der Fahrzeugkabine und die Fahrzeugkabine mittels mindestens einem zweiten Federelement und/oder einem zweiten Dämpfungselement gegenüber einem Fahrzeugrahmen gefedert gelagert ist, sowie ein Verfahren zur Federung eines Fahrzeugsitzes und einer Fahrzeugkabine gemäß den Oberbegriffen der Patentansprüche 1 und 9.

Aus der gattungsgemäßen EP 1 987 970 A2 ist ein aktives Bewegungssystem eines landwirtschaftlichen oder industriellen Nutzfahrzeugs, mit mindestens einem aktiv ansteuerbaren Aktuator, mindestens einem Sensor und einer Steuereinrichtung, wobei eine Sekundärseite gegenüber einer Primärseite des Fahrzeugs federbar bewegbar ist, wobei mit dem Aktuator die Primärseite gegenüber der Sekundärseite das Fahrzeug abstützbar ist, wobei ein Bediener des Fahrzeugs der Sekundärseite des Fahrzeugs zugeordnet ist, wobei mit dem mindestens einem Sensor eine Größe, die eine Zustandsgröße eines Fahrzeugs repräsentiert, detektierbar und der Steuereinrichtung übermittelbar ist, wobei mit der Steuereinrichtung eine Zustandsgröße eines aktuellen Betriebszustandes des Fahrzeugs ermittelbar ist, offenbart. Gemäß der EP 1 987 970 A2 ist mit der Steuereinrichtung in Abhängigkeit des aktuellen Betriebszustandes des Fahrzeugs der mindestens eine Aktuator derart aktiv ansteuerbar, das mit dem mindestens einem Aktuator die Sekundärseite gegenüber der Primärseite bewegbar ist, um hier durch den Bediener einen nicht optimalen oder einen unsicheren Betriebszustand des Fahrzeugs oder ein nicht optimalen oder einen unsicheren Betriebszustand mindestens einer Arbeitsfunktion wahrnehmbar zu machen.

Die Druckschrift EP 0 739 766 B1 offenbart ein Verfahren zur Steuerung der relativen Bewegung zwischen zwei Elementen, die durch eine Verbindung beweglich miteinander verbunden sind, die eine Federanordnung einschließt, welche die Elemente in einer Gleichgewichtsposition halten soll, wobei wenigstens das erste der beiden Elemente extrem erzeugten Bewegungseinträgen ausgesetzt ist und eine erste Kraft als Antwort darauf an das zweite Element übertragen soll; wobei die Elemente mit einer Einrichtung zum Anlegen an der zweiten gesteuerten Kraft dazwischen ausgestattet sind.

Die Druckschrift EP 1 188 608 A1 offenbart ein Federungssystem zum Stützen einer Masse auf einem Unterbau eines Fahrzeugs, wobei dazu ein hydraulischer Stellantrieb, der zwischen der Masse und dem Unterbau gekoppelt ist, und ein Entlastungselement, das zwischen der Masse und dem Unterbau gekoppelt ist, und ein Steuersystem, welches den hydraulischen Stellantrieb aktiv steuert und welches das Entladungseleme steuert, vorgesehen sind und das Steuersystem das Entlastungselement als Funktion eines Steuersignals steuert, welches in der aktiven Steuerung des Stellantriebs verwendet wird.

Fahrzeuge mit gefederten Fahrzeugsitzen sind insbesondere für eine Dämpfung einer Höhenauslenkung des Fahrzeugsitzes beim Überfahren von unebenen Fahrbahnoberflächen, wie Schlaglöchern, bekannt. EP 1 188 608 A1 zeigt ein Dämpfungssystem für gefederte Fahrzeugsitze, bei dem zwischen einem Sitzteil und einem mit dem Fahrzeug verbundenen Unterteil neben einer mechanischen flexiblen Verbindungseinrichtung eine pneumatische Entlastungsvorrichtung und ein hydraulisches Stellglied angeordnet sind. Sowohl die pneumatische Entlastungsvorrichtung als auch das hydraulische Stellglied werden als Funktion eines Sitzfehtersignals, welches beispielsweise durch eine ruckartige Hbhenverstellung des Sitzteifes erzeugt wird, durch eine Steuereinrichtung gesteuert.

Derartige Federungsvorrichtungen sind insofern einfach aufgebaut, als dass das Stellglied beim Empfang eines Positionsfehtersignales bezüglich des Fahrzeugsitzes, der mit dem

Gewicht des Fahrers beaufschlagt wird, Luft mittels eines Kompressors zugeführt bekommt und hierdurch ein vergrößertes Luftvolumen zur ausreichenden Dämpfung des Fahrzeugsitzes geschaffen wird. Derartige Federungsvorrichtungen weisen entlang ihrer Höhenverstellung keinen Komfortbereich auf, der sich über einen längeren Abschnitt des Höhenverstellungsweges erstreckt und somit eine gleichmäßige Federung innerhalb dieses Höhenverstellungsbereiches mit den gleichen Rückstellkräften darstellt.

Es sind zudem Luftfedern bekannt, die eine linear verlaufende Kraft-Weg-Luftfederkennlinie aufweisen, deren Steigung in Abhängigkeit von der Ausgestaltung der Luftfeder und einem angewandten Zusatzvolumen unterschiedlich ist. In der Regel werden bei derartigen Luftfedern konstant gehaltene Zusatzvolumina verwendet, die als eigentliches Luftvolumen der Luftfeder mit der ein- und ausfahrenden Luftfeder verbunden sind. Derartig konstant gehaltene Zusatzvolumina haben zur Folge, dass, wenn die Luftfeder mit einer Kraft-Weg-Luftfederkennlinie mit geringer Steigung eingestellt ist, ein Zurückschwingen des Sitzteils in eine mittlere Position der Kraft-Weg-Luftfederkennlinie deshalb nicht möglich ist, da Reibungskräfte innerhalb der gesamten Federungsvorrichtung größer sind als eine Rückstellkraft innerhalb der Kraft-Weg-Luftfederkennlinie. Andererseits wird bei einer Ausbildung der Federungsvorrichtung derart, dass die Rückstellkraft größer ist - also eine größere Steigung der Luftfederkennlinie eingestellt wird - eine vergleichsweise harte Dämpfung sowohl im mittleren Hubbereich als auch in den Endhubbereichen der Luftfeder erreicht. Weiterhin ist bei Anwendung einer Luftfeder mit geringer Steigung die Gefahr groß, dass ein Erreichen der Endanschläge in Hubendbereichen der Luftfeder bei starken Ein- und Ausfahrbewegungen aufgrund einer starken Unebenheit stattfindet, wodurch ein verminderter Sitzkomfort für den Benutzer des Fahrzeugsitzes entsteht.

Die oben genannten Federungssysteme haben die Gemeinsamkeit, dass sie in der Regel für Fahrzeugsitze als aktiv beeinflussbare Federungssysteme eingesetzt werden. Die Funktion dieser Federungssysteme wird in der Regel unabhängig von der Funktion einer eventuell zusätzlich vorhandenen Fahrzeugkabinenfederung betrachtet. Es wird also lediglich eine auf den Fahrzeugsitz einwirkende Schwingung, welche entweder von der gefederten Fahrzeugkabine oder dem Fahrzeugrahmen herrührt, geachtet, um eine Reaktion in dem Federungssystem des Fahrzeugssitzes zur optimalen Federung des Fahrzeugsitzes herbeizuführen. Eine hingegen aktive Steuerung der Federungsbewegung der Nutzfahrzeugkabine in Abhängigkeit von der aktiv beeinflussten Federungsbewegung des Fahrzeugsitzes unter Berücksichtigung der Auslenkung des Fahrzeugrahmens findet jedoch nicht statt. Vielmehr wird als häufige Kombination eine passiv geregelte Federungsbewegung der Fahrzeugkabine, welche nicht die Zu- und Abschaltung von Zusatzvolumen vorsieht, sondern beispielsweise lediglich eine in sich geschlossene Luftfeder verwendet, mit einer aktiv geregelten Federungsbewegung, die beispielsweise mittels eines Zusatzvolumens erfolgen kann, des Fahrzeugsitzes angewendet. Hieraus ergibt sich nachteilhaft die hohe Wahrscheinlichkeit, dass entweder das Federelement der Fahrzeugkabine oder das Federelement des Fahrzeugsitzes oder beide in ihre Endanschlagsbereiche gelangen, wenn eine starke Auslenkung des Fahrzeugrahmens bei Durchfahren eines Schlagloches stattfindet. Es ergibt sich unter anderem auch, dass für nachfolgende Federbewegungen unter Umständen nicht mehr der gesamte Federungsweg der Federelemente des Fahrzeugsitzes und/oder der Fahrzeugkabine und/oder ggf. von Dämpfungselementen, die zusätzlich oder stattdessen angeordnet sind, zur Verfügung stehen.

Demzufolge liegt der vorliegenden Erfindung die Aufgabe zugrunde, ein Fahrzeug sowie ein Verfahren zur Verfügung zu stellen, bei dem sowohl eine gefederte Fahrzeugkabine als auch ein gefederter Fahrzeugsitz eine optimale Federung unter Ausnutzung der zur Verfügung stehenden Federwege durchführen und eine sehr geringe Auslenkungsbewegung des Fahrzeugsitzes selbst bei einer auf das Fahrzeug von außerhalb einwirkenden starken Auslenkung herbeiführen.

Diese Aufgabe wird vorrichtungsseitig durch die Merkmale des Patentanspruches 1 und verfahrensseitig durch die Merkmale des Patentanspruches 10 gelöst.

Ein wesentlicher Punkt der Erfindung liegt darin, dass bei einem Fahrzeug mit einem gefederten Fahrzeugsitz in einer gefederten Fahrzeugkabine, bei dem der Fahrzeugsitz mittels mindestens einem ersten Federelement und/oder ersten Dämpfungselement gegenüber der Fahrzeugkabine in Fahrzeughöhen- und/oder Fahrzeuglängs- und/oder Fahrzeugbreitenrichtung gefedert gelagert ist und bei dem die Fahrzeugkabine mittels mindestens einem zweiten Federelement und/oder zweiten Dämpfungselement gegenüber einem Fahrzeugrahmen in Fahrzeughöhen- und/oder Fahrzeuglängs- und/oder Fahrzeugbreitenrichtung gefedert gelagert ist, eine Steuereinrichtung angeordnet ist, die in Abhängigkeit von einem ersten gemessenen Beschleunigungswert einer Auslenkung des Fahrzeugrahmens eine erste Kraftbeaufschlagung zur Regulierung der Auslenkung des ersten Federelementes und/oder Dämpfungselementes und eine zweite Kraftbeaufschlagung zur Regulierung der Auslenkung des zweiten Federelementes und/oder Dämpfungselementes in gegenseitiger Abhängigkeit bewirkt.

Erfindungsgemäß ist um die auf den Fahrzeugrahmen einwirkende Beschleunigung zu messen, mindestens ein, vorzugsweise dreidimensional messender erster Beschleunigungssensor zum Messen des mindestens einen ersten Beschleunigungswertes am Fahrzeugrahmen angebracht. Dieser Beschleunigungssensor kann nicht nur in Höhenrichtung, sondern - sofern er dafür ausgebildet ist - auch in Fahrzeuglängs- und in Fahrzeugbreitenrichtung Beschleunigungen messen, um hierdurch ggf. Kraftbeaufschlagungen in entgegengesetzte Richtungen sowohl den Federungssystem des Fahrzeugsitzes als auch in dem Federungssystem der Fahrzeugkabine zu bewirken.

Durch eine gegenseitige Berücksichtigung der ersten und zweiten Kraftbeaufschlagung mittels der Steuereinrichtung bei stattfindender Auslenkung des Fahrzeugrahmens, wie es beispielsweise bei Durchfahren eines Schlagloches stattfinden karin, wird vorteilhaft erreicht, dass sich beide Federungssysteme, also sowohl das Federungssystem des Fahrzeugsitzes als auch das Federungssystem des Nutzfahrzeugkabine aktiv in gegenseitiger Abhängigkeit derart regeln lassen, dass Endanschläge der Federungssysteme nicht erreicht werden. Vielmehr kann bei einer entsprechend starken Auslenkung des Fahrzeugrahmens gegenüber dem Fahrzeugsitz und der Fahrzeugkabine ein aktives Gegensteuern, also Kraftbeaufschlagen sowohl des ersten als auch des zweiten Federelementes und/oder des ersten oder zweiten Dämpfungsetementes gleichzeitig oder zeitlich versetzt erfolgen, so dass eine vergrößerte Gegenkraft zu der Auslenkungskraft der von dem Fahrzeugrahmen herrührenden Auslenkung zur Verfügung steht. Dies hat nicht nur zur Folge, dass die Endanschläge der Federelemente bzw. Dämpfungselemente nicht erreicht werden, sondern dass auch im Ergebnis eine sehr ruhige Position des Fahrzeugsitzes aufgrund der zusätzlichen aktiven Regulierung des Federungssystems der Fahrzeugkabine selbst bei einer starken auf den Fahrzeugrahmen von unten wirkenden Auslenkung stattfindet. Im Ergebnis sitzt der den Fahrzeugsitz benutzende Fahrer sehr ruhig in seinem Fahrzeugsitz bei Überfahren stark unebener Fahrbahnen, wie es beispielsweise bei Traktoren, die im Off-Road eingesetzt werden, der Fall ist.

Gemäß einer bevorzugten Ausführungsform ist die Steuereinrichtung derart ausgebildet, dass sie die erste und die zweite Kraftbeaufschlagung in gegenseitiger Abhängigkeit derart bewirkt, dass eine zeitliche Veränderung der Position des Fahrzeugsitzes gering ist. Dies kann dadurch erfolgen, dass die auf den Fahrzeugrahmen einwirkende Beschleunigung gemessen wird und mit einer sehr geringen zeitlichen Verzögerung, von beispielsweise 5 bis 500 Millisekunden, vorzugsweise von 100 bis 200 Millisekunden, besonders bevorzugt von 140 Millisekunden, eine Gegenkraft sowohl in dem ersten als auch in dem zweiten Federelement, demzufolge sowohl in dem Federungssystem des Fahrzeugsitzes als auch im Federungssystem der Nutzfahrzeugkabine, erzeugt wird.

Weiterhin wird gemäß einer bevorzugten Ausführungsform die Steuereinrichtung die erste und die zweite Kraftbeaufschlagung in gegenseitiger Abhängigkeit derart bewirken, dass bei Auslenkung des Fahrzeugrahmens ein in Bezug auf einen zur Verfügung stehenden Federweg und/oder ein zur Verfügung stehenden Dämpfungsweg vorhandener Restfederweg des ersten Federelementes und/oder Dämpfungselementes und des zweiten Federelementes und/oder Dämpfungselementes in beide Wegrichtungen zur Verfügung steht. Dies kann beispielsweise dadurch erreicht werden, dass bei einer von unten nach oben wirkenden Auslenkung des Fahrzeugrahmens, wie es bei einem Verfahren eines Schlagloches der Fall ist, eine von oben nach unten wirkende Gegenkraft sowohl in dem ersten Federelement des Fahrzeugsitzes als auch in dem zweiten Federelement der Fahrzeugkabine gleichzeitig mit dem gleichen oder unterschiedlichen Werten erzeugt wird, um hierdurch zu Vermeiden, dass entweder das erste Federelement oder das zweite Federelement die komplette Auslenkung, welche auf den Fahrzeugrahmen wirkt, ausgleichen muss und hierdurch das erste Federelement oder das zweite Federelement an ein Endanschlag kommen würde.

Zudem ist vorzugsweise mindestens ein an der Fahrzeugkabine angebrachter, vorzugsweise dreidimensional messender, zweiter Beschleunigungssensor zum Messen mindestens eines zweiten Beschleunigungswertes einer Beschleunigung der Fahrzeugkabine vorgesehen. Dies ermöglicht, dass die Beschleunigungswerte, welche durch Einwirkung der Auslenkung des Fahrzeugrahmens auf die Fahrzeugkabine einwirken und somit eine Beschleunigung der Fahrzeugkabine verursachen, zusätzlich in der Steuereinrichtung mitberücksichtigt werden, um eine entsprechende Gegenkraft bzw. Kraftbeaufschlagung der Fahrzeugkabine und auch insbesondere des Fahrzeugsitzes zu erzeugen.

Es ist mindestens ein an der Fahrzeugkabine angebrachter erster Positionssensor zum Messen der momentanen Position der Fahrzeugkabine gegenüber dem Fahrzeugrahmen vorhanden, um die momentane Lage bzw. Position der Fahrzeugkabine vor, während und nach erfolgter Auslenkung des Fahrzeugrahmens auch im Hinblick auf die Nulllage des Federelementes, welches für die Fahrzeugkabine vorgesehen ist, zu bestimmen und zu messen.

Der zweite Beschleunigungssensor kann insbesondere für die Messung der Nachschwingungsbeschleunigung, also derjenigen Schwingung, die nach erfolgter Einleitungsbeschleunigung bzw. Anfangsbeschleunigung stattfindet, verwendet werden, um ein Nachfedern der Fahrzeugkabine zu messen und mittels Gegenkraft in dem Federungssystem möglichst schnell abklingen zu lassen.

Mindestens ein weiterer am Fahrzeugsitz angebrachter zweiter Positionssensor ist dafür vorgesehen, die momentane Position bzw. Lage des Fahrzeugsitzes gegenüber der Fahrzeugkabine und/oder dem Fahrzeugrahmen zu messen, um hierdurch wiederum die Position des Fahrzeugsitzes gegenüber einer Nulllage des ersten Federelementes bzw. Federungssystems des Fahrzeugsitzes zu bestimmen und so der Steuereinrichtung die notwendigen Informationen zu geben, um ggf. einen ausreichend großen oberen und unteren Restfederweg bei einer Höhenverstellung bzw. Höhenauslenkung des Fahrzeugsitzes in dem Federelement sicherzustellen.

Sämtliche Beschleunigungssensoren und Positionssensoren sind mittels Steuerleitungen mit der Steuereinrichtung verbunden und leiten Daten zur Steuereinrichtung weiter.

Die Steuereinrichtung ist über Regelventile mit Zusatzvolumen zum Zu- und/oder Abschalten von Zusatzvolumen zu dem jeweils als Luftfeder ausgebildeten ersten und zweiten Federelement mittels zweiter Steuerleitungen verbunden, so dass Steuersignale an die Regelventile von der Steuereinrichtung abgegeben werden können. Dies dient zur Erzeugung der Kraftbeaufschlagung bzw. Gegenkraft bei stattgefundener Einleitungsschwingung auf den Fahrzeugrahmen.

Ein Verfahren zur Federung eines Fahrzeugs mit gefederten Fahrzeugsitz und gefederten Fahrzeugkabine ermöglicht vorteilhaft das mit den oben angegebenen Bauteilen durchgeführte aktive Ausgleichen von Schwingungen, die auf den Fahrzeugrahmen einwirken, mittels den ersten und zweiten Federelementen bzw. ersten und zweiten Dämpfungselementen, die auch in Kombination auftreten können. Selbstverständlich kann eines oder mehrere der ersten und zweiten Federelemente und ersten und zweiten Dämpfungselemente auch passiv geregelt, also nicht mittels eines Zusatzvolumens beeinflusst werden.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung ein Nutzfahrzeug mit einer gefederten Nutzfahrzeugkabine und einem gefederten Fahrzeugsitz;
- Fig. 2: in einer schematischen Darstellung ein Ausschnitt eines Nutzfahrzeuges mit einem angedeuteten Fahrzeugrahmen, einer Fahrzeugkabine und einem Fahrzeugsitz gemäß einer Ausführungsform der Erfindung und
- Fig. 3: in einem Diagramm die von den verschiedenen Bauteilen des erfindungsgemäßen Fahrzeuges durchgeführten Schwingungen gemäß dem erfindungsgemäßen Verfahren.

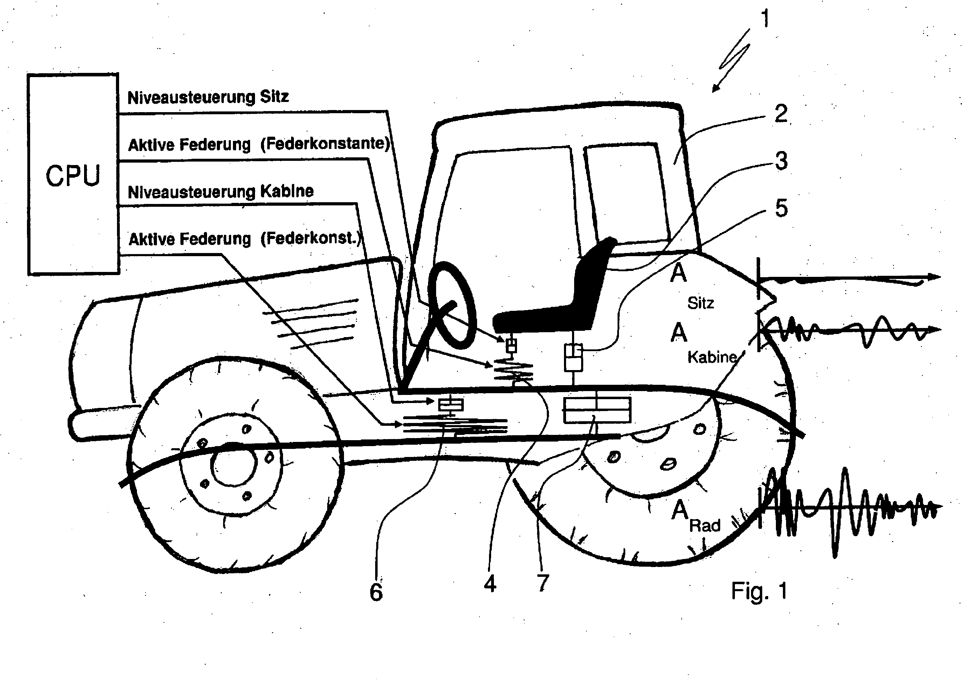

In Fig. 1 wird in einer schematischen Darstellung ein Traktor 1 als Nutzfahrzeug mit einer Nutzfahrzeugkabine 2 und einem Fahrzeugsitz 3 gezeigt. Sowohl die Nutzfahrzeugkabine 2 als auch der Fahrzeugsitz 3 sind mittels einer Luftfeder und einem Dämpfungselement 4, 5 sowie 6, 7 gefedert gelagert, wobei die Nutzfahrzeugkabine gegenüber dem restlichen Fahrzeug federnd gelagert ist und der Fahrzeugsitz gegenüber der Nutzfahrzeugkabine 2 federnd gelagert ist.

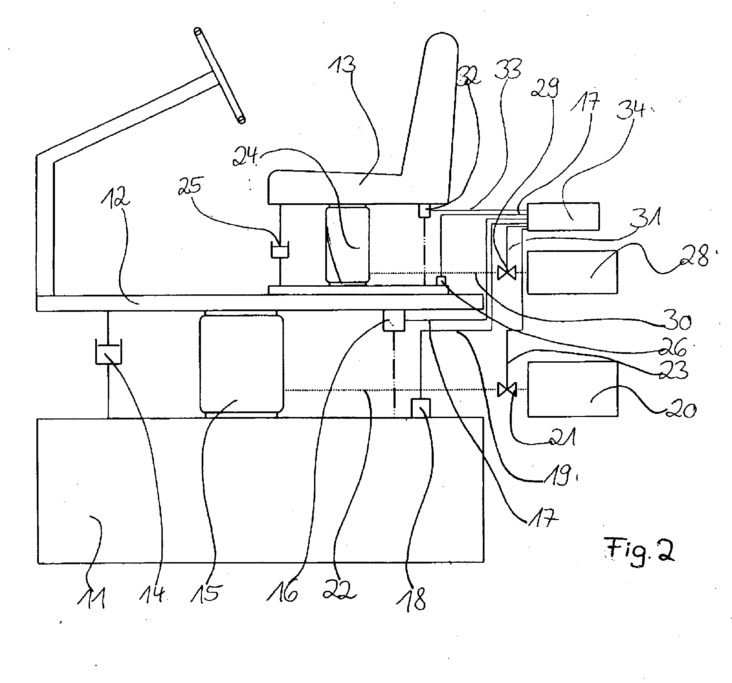

In Fig. 2 wird in einer schematischen Darstellung ein Ausschnitt des erfindungsgemäßen Fahrzeuges mit einem angedeuteten Fahrzeugrahmen einer Fahrzeugkabine und einem Fahrzeugsitz gemäß einer Ausführungsform der Erfindung gezeigt.

Der Fahrzeugrahmen 11 ist gegenüber einem Boden 12 einer Fahrzeugkabine mittels einer Luftfeder 15 und einem Dämpfungselement 14 federnd und dämpfend gelagert. Der Fahrzeugsitz 13 ist gegenüber dem Boden 12 der Fahrzeugkabine mittels einer weiteren Luftfeder 24 und einem weiteren Dämpfungselement 25 federnd und dämpfend gelagert.

An dem Fahrzeugrahmen 11 ist ein erster Beschleunigungssensor 18 angebracht, dessen Steuerleitung 19 mit einer Steuereinrichtung 34 zur Übermittlung von Steuerdaten bzw. Beschleunigungswerten, aber auch Werten über den zurückgelegten Weg des Fahrzeugrahmens und ggf. den Abstand zur Nulllage übermittelt.

Ebenso ist ein weiterer Beschleunigungssensor 26 an dem Boden 12 der Fahrzeugkabine angeordnet, der ebenso derartige Werte mittels einer Steuerleitung 27 an die Steuereinrichtung 34 übermitteln kann.

Erste und zweite Positionssensoren 16 und 32 sind an der Unterseite des Fahrzeugsitzes 13 und der Unterseite des Bodens 12 des Fahrzeugkabine angeordnet und können Positions- bzw. Lagedaten vorzugsweise hinsichtlich der momentanen Höhenauslenkung über Steuerleitungen 17 und 27 an die Steuereinrichtung 34 weiterleiten.

Sobald der Beschleunigungssensor 18 einen Beschleunigungswert durch eine von unten nach oben wirkende Auslenkung aufgrund eines Durchfahrens eines Schlagloches erfährt, übermittelt er den Beschleunigungswert mittels Steuerleitung 19 an die Steuereinrichtung 34. Die Steuereinrichtung 34 berechnet innerhalb einer kürzesten Zeit eine voraussichtlich zu erwartende Auslenkung des Fahrzeugsitzes 13 und der Nutzfahrzeugkabine mit dem Boden 12 und steuert Regelventile 29 und 21 mittels Steuerleitungen 31 und 23 an, um Zusatzvolumen aus Zusatzvolumentanks 20 und 28 mittels Luftleitungen 30 und 22 an die Luftfedern 15 und 24 weiterzuleiten. Dies hat zur Folge, dass die Luftfedern mit einer Gegenkraft beaufschlagt werden, um ein Nachobenschwingen des Fahrzeugsitzes und der Fahrzeugkabine zu vermeiden und ein weitestgehend ruhiges Beibehalten der momentanen Höhenausrichtung des Fahrzeugsitzes 13 hierdurch zu bewirken.

Der Beschleunigungssensor 16 dient dazu, nach der anfänglichen erfolgten Auslenkung des Fahrzeugrahmens, die auf die Fahrzeugkabine gewirkt hat, Nachschwingungen der Fahrzeugkabine zu messen und über die Steuerleitung 17 an die Steuereinrichtung 34 weiterzuleiten, so dass diese eine entsprechend gegengerichtete Federkraft durch Ansteuerung des Regelventils 21 mittels der Steuerleitung 23 und Zu- oder Abschalten des Zusatzvolumens 20 zu dem Federelement bzw. der Luftfeder 15 einen Ausgleich zu den Nachschwingungsvorgang erzeugen kann.

Selbstverständlich sind sämtliche Beschleunigungssensoren auch als dreidimensional arbeitende Sensoren denkbar, so dass eine Kraftbeaufschlagung der Federelemente 15, 24, ggf. ebenso in dreidimensionaler Richtung, auch Schwingungen entgegenwirken kann, die nicht nur in Höhenrichtung, sondern auch in Fahrzeuglängs- und Fahrzeugbreitenrichtung erfolgen.

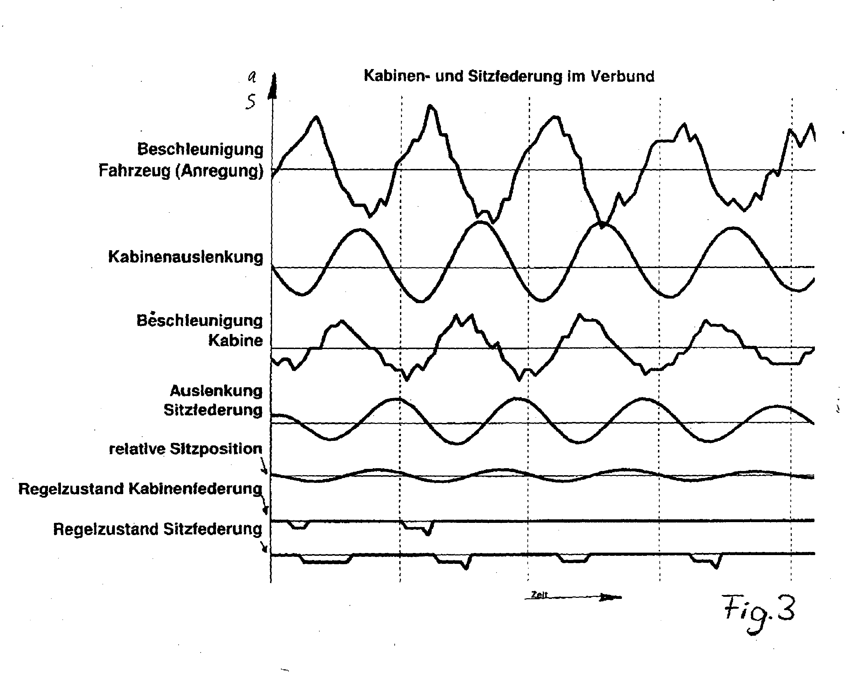

In Fig. 3 sind in einem Diagramm eine Mehrzahl an Schwingungen dargestellt, wobei über die Ordinate die auf das System einwirkende Beschleunigungswerte und über die Abszisse die Zeit dargestellt ist.

Wie dem Diagramm zu entnehmen ist, findet eine anfängliche Schwingung durch Auslenkung des Fahrzeugrahmens, auch Anregungsschwingung genannt, durch eine Beschleunigungsbewegung des gesamten Fahrzeuges, beispielsweise in Höhenrichtung, statt. Dies ist als oberste Linie dargestellt.

Eine derartige auf den Fahrzeugrahmen einwirkende Beschleunigungsschwingung hat wiederum eine als zweite Linie dargestellte Kabinenauslenkung zur Folge.

Die Beschleunigungsbewegung der Kabine ist als dritte Schwingungsbewegung dargestellt.

In der vierten Linie ist die Auslenkungsbewegung der Sitzfederung bzw. des Fahrzeugsitzes wiedergegeben, wobei diese Bewegung um nahezu 180 ° Phasenverschiebung zu der Kabinenauslenkung stattfindet, welche wiederum eine nahezu 180 ° Phasenverschiebung gegenüber der Beschleunigungsbewegung des Fahrzeugrahmens aufweist.

Im Ergebnis wird aufgrund der entsprechend komplementär stattfindenden Schwingungen der Kabinenbeschleunigung und der Fahrzeugbeschleunigung eine sehr ruhige Sitzbewegung und damit eine relativ stetige Sitzposition des Fahrzeugsitzes erhalten. Dies wird als fünfte Linie wiedergegeben.

In der sechsten und siebten Linie sind die entsprechend zur Regelung der Federelemente der Fahrzeugkabine und des Fahrzeugsitzes notwendigen Regelsignale, welche in Reaktion auf die erfolgte Auslenkung des Fahrzeugrahmens von der Steueranrichtung an die Regelventile zur Zu- und Abschaltung der Zusatzvolumen gesendet werden, wiedergegeben.

### Bezugszeichenliste

- 1: Traktor
- 2: Nutzfahrzeugkabine
- 3: Fahrzeugsitz
- 4, 5, 6, 7: Dämpfungselemente, Federelemente
- 11: Fahrzeugrahmen
- 12: Boden
- 13: Fahrzeugsitz
- 14, 25: Dämpfungselement
- 15, 24: Luftfeder
- 16: erste Positionssensoren
- 17, 27: Steuerleitungen
- 18, 26: Beschleunigungssensor
- 19,23,27,31: Steuerleitung
- 20, 28: Zusatzvolumentank
- 21,29: Regelventile
- 22, 30: Luftleitungen
- 32: zweite Positionssensoren
- 34: Steuereinrichtung

## Patentansprüche

1. Fahrzeug mit einem gefederten Fahrzeugsitz (3; 13) in einer gefederten Fahrzeugkabine (2; 12), wobei der Fahrzeugsitz (3; 13) mittels mindestens einem ersten Federelement (24) und/oder einem ersten Dämpfungselement (25) gegenüber der Fahrzeugkabine (2; 12) in Fahrzeughöhen und/oder Fahrzeuglängs- und/oder Fahrzeugbreitenrichtung gefedert gelagert ist und die Fahrzeugkabine (2; 12) mittels mindestens einem zweiten Federelement (15) und/oder zweiten Dämpfungselement (14) gegenüber einem Fahrzeugrahmen (11) in Fahrzeughöhen- und/oder Fahrzeuglängsund/oder Fahrzeugbreitenrichtung gefedert gelagert ist, wobei eine Steuereinrichtung (34), die in Abhängigkeit von einem ersten gemessenem Beschleunigungswert einer Auslenkung des Fahrzeugrahmens (11) eine erste Kraftbeaufschlagung zur Regulierung der Auslenkung des ersten Federelements (24) und/oder Dämpfungselement (25) und eine zweite Kraftbeaufschlagung zur Regulierung der Auslenkung des zweiten Federelementes (15) und/oder Dämpfungselementes (14) in gegenseitiger Abhängigkeit bewirkt,
**gekennzeichnet durch**
mindestens einen am Fahrzeugrahmen (11) angebrachten ersten Beschleunigungssensor (18) zum Messen des ersten Beschleunigungswertes.

2. Fahrzeug nach Anspruch 1,
**dadurch gekennzeichnet, dass**
die Steuereinrichtung (34) die erste und die zweite Kraftbeaufschlagung in gegenseitiger Abhängigkeit derart bewirkt, dass eine zeitliche Veränderung der Position des Fahrzeugsitzes (3; 13) gering ist.

3. Fahrzeug nach Anspruch 1 oder 2,
**dadurch gekennzeichnet, dass**
die Steuereinrichtung (34) die erste und die zweite Kraftbeaufschlagung in gegenseitiger Abhängigkeit derart bewirkt, dass bei Auslenkung des Fahrzeugrahmens (11) ein im Bezug auf einen zur Verfügung stehenden Federweg und/oder einem zur Verfügung stehenden Dämpfungsweg vorhandener Restfederweg des ersten Federelementes (24) und/oder Dämpfungselementes (25) und des zweiten Federelementes (15) und/oder Dämpfungselementes (14) in beide Wegrichtungen zur Verfügung steht.

4. Fahrzeug nach einem der vorangegangenen Ansprüche,
**gekennzeichnet durch**
mindestens einen an der Fahrzeugkabine (12) angebrachten, vorzugsweise dreidimensional messenden, zweiten Beschleunigungssensor (26) zum Messen eines zweiten Beschleunigungswertes einer Beschleunigung der Fahrzeugkabine (12).

5. Fahrzeug nach einem der vorangegangenen Ansprüche,
**gekennzeichnet durch**
mindestens einen an der Fahrzeugkabine (12) angebrachten ersten Positionssensor (16) zum Messen der momentanen Position der Fahrzeugkabine (12) gegenüber dem Fahrzeugrahmen (11).

6. Fahrzeug nach einem der vorangegangenen Ansprüche,
**gekennzeichnet durch**
mindestens einen an dem Fahrzeugsitz (13) angebrachten zweiten Positionssensor (32) zum Messen der momentanen Position des Fahrzeugsitzes (13) gegenüber der Fahrzeugkabine (12) und/oder dem Fahrzeugrahmen (11).

7. Fahrzeug nach einem der vorangegangenen Ansprüche,
**dadurch gekennzeichnet, dass**
sämtliche Beschieunigungssensoren (18, 26) und Positionssensoren (16, 32) mittels erster Steuerleitungen (17, 19, 27, 33) mit der Steuereinrichtung (34) verbunden sind.

8. Fahrzeug nach einem der vorangegangenen Ansprüche,
**dadurch gekennzeichnet, dass**
die Steuereinrichtung (34) mit Zusatzvolumenelemente (20, 28) zum Zu- und/oder Abschalten von Zusatzvolumen zu den jeweils als Luftfeder (15, 24) ausgebildeten ersten und/oder zweiten Federelementen mittels zweiter Steuerleitungen (23, 31) verbunden ist.

9. Verfahren zur Federung eines Fahrzeugssitzes (3; 13) in einer gefederten Fahrzeugkabine (2; 12), wobei der Fahrzeugsitz (3; 13) mittels mindestens einem Federelement (24) und/oder ersten Dämpfungselement (25) gegenüber der Fahrzeugkabine (2; 12) in Fahrzeughöhen- und/oder Fahrzeuglängs- und/oder Fahrzeugbreitenrichtung gefedert wird und die Fahrzeugkabine (2; 12) mittels mindestens einem zweiten Federelement (15) und/oder zweiten Dämpfungselement (14) gegenüber einem Fahrzeugrahmen (11) in Fahrzeughöhen- und/oder Fahrzeuglängs- und/oder Fahrzeugbreitenrichtung gefedert wird, wobei mittels einer Steuereinrichtung (34) in Abhängigkeit von einem ersten gemessenen Beschleunigungswert einer Auslenkung des Fahrzeugrahmens (11) eine erste Kraftbeaufschlagung zur Regulierung derAuslenkung des ersten Federelementes (24) und/oder Dämpfungselementes (25) und eine zweite Kraftbeaufschlagung zur Regulierung der Auslenkung des zweiten Federelementes (15) und/oder Dämpfungselementes (15) in gegenseitiger Abhängigkeit der Auslenkungen der Federelemente und/oder Dämpfungselemente erfolgt,
**dadurch gekennzeichnet, dass**
mindestens ein Beschleunigungssensor (18) zum Messen des ersten Beschleunigungswertes am Fahrzeugrahmen (11) angebracht wird.

## Claims

1. Vehicle comprising a spring-mounted vehicle seat (3; 13) in a spring-mounted vehicle cab (2; 12), wherein the vehicle seat (3; 13) is spring-mounted by means of at least one first spring element (24) and/or one first damping element (25) relative to the vehicle cab (2; 12) in the vehicle height and/or vehicle length and/or vehicle width direction, and the vehicle cab (2; 12) is spring-mounted by means of at least one second spring element (15) and/or second damping element (14) relative to a vehicle frame (11) in the vehicle height and/or vehicle length and/or vehicle width direction, wherein a control device (34) which, as a function of a first measured acceleration value of an excursion of the vehicle frame (11), causes a first application of force for regulating the excursion of the first spring element (24) and/or damping element (25) and a second application of force for regulating the excursion of the second spring element (15) and/or damping element (14), in mutual dependence on one another, **characterised by** at least one first acceleration sensor (18) for measuring the first acceleration value, said first acceleration sensor being fitted on the vehicle frame (11).

2. Vehicle according to claim 1, **characterised in that** the control device (34) causes the first and the second application of force in mutual dependence on one another in such a way that a temporal change in position of the vehicle seat (3; 13) is small.

3. Vehicle according to claim 1 or 2, **characterised in that** the control device (34) causes the first and the second application of force in mutual dependence on one another in such a way that, in the event of an excursion of the vehicle frame (11), a residual spring travel of the first spring element (24) and/or damping element (25) and of the second spring element (15) and/or damping element (14) that exists in relation to an available spring travel and/or an available damping travel is available in both directions of travel.

4. Vehicle according to one of the preceding claims, **characterised by** at least one second acceleration sensor (26) for measuring a second acceleration value of an acceleration of the vehicle cab (12), said second acceleration sensor being fitted on the vehicle cab (12) and preferably measuring in three dimensions.

5. Vehicle according to one of the preceding claims, **characterised by** at least one first position sensor (16) for measuring the current position of the vehicle cab (12) relative to the vehicle frame (11), said first position sensor being fitted on the vehicle cab (12).

6. Vehicle according to one of the preceding claims, **characterised by** at least one second position sensor (32) for measuring the current position of the vehicle seat (13) relative to the vehicle cab (12) and/or the vehicle frame (11), said second position sensor being fitted on the vehicle seat (13).

7. Vehicle according to one of the preceding claims, **characterised in that** all the acceleration sensors (18, 26) and position sensors (16, 32) are connected by means of first control lines (17, 19, 27, 33) to the control device (34).

8. Vehicle according to one of the preceding claims, **characterised in that** the control device (34) is connected to additional volume elements (20, 28) for switching on and/or switching off additional volumes to the first and/or second spring elements by means of second control lines (23, 31), said first and second spring elements being designed in each case as air springs (15, 24).

9. Method for the suspension of a vehicle seat (3; 13) in a spring-mounted vehicle cab (2; 12), wherein the vehicle seat (3; 13) is spring-mounted by means of at least one spring element (24) and/or first damping element (25) relative to the vehicle cab (2; 12) in the vehicle height and/or vehicle length and/or vehicle width direction, and the vehicle cab (2; 12) is spring-mounted by means of at least one second spring element (15) and/or second damping element (14) relative to a vehicle frame (11) in the vehicle height and/or vehicle length and/or vehicle width direction, wherein as a function of a first measured acceleration value of an excursion of the vehicle frame (11), a first application of force for regulating the excursion of the first spring element (24) and/or damping element (25) and a second application of force for regulating the excursion of the second spring element (15) and/or damping element (15) takes place by means of a control device (34), in mutual dependence on the excursions of the spring elements and/or damping elements, **characterised in that** at least one acceleration sensor (18) for measuring the first acceleration value is fitted on the vehicle frame (11).

## Revendications

1. Véhicule ayant un siège de véhicule (3 ; 13) suspendu sur ressorts dans une cabine de véhicule (2 ; 12) montée sur ressorts, dans lequel le siège de véhicule (3 ; 13) est monté sur ressorts au moyen d'au moins un premier élément à ressort (24) et/ou un premier élément d'amortissement (25) par rapport à la cabine de véhicule (2 ; 12) dans le sens de la hauteur et/ou de la longueur et/ou de la largeur du véhicule et la cabine de véhicule (2 ; 12) est montée sur ressorts au moyen d'au moins un second élément à ressort (15) et/ou un second élément d'amortissement (14) par rapport à un châssis du véhicule (11) dans le sens de la hauteur et/ou de la longueur et/ou de la largeur du véhicule, dans lequel il est prévu un dispositif de commande (34) qui génère en interdépendance, en fonction d'une première valeur d'accélération mesurée d'une déviation du châssis de véhicule (11), une première application de force pour réguler la déviation du premier élément à ressort (24) et/ou du premier élément d'amortissement (25) et une seconde application de force pour réguler la déviation du second élément à ressort (15) et/ou du second élément d'amortissement (14),
**caractérisé par**
au moins un premier capteur d'accélération (18) monté sur le châssis de véhicule (11) pour mesurer la première valeur d'accélération.

2. Véhicule selon la revendication 1,
**caractérisé en ce que**
le dispositif de commande (34) génère en interdépendance les première et seconde applications de force de sorte qu'une modification de la position du siège de véhicule (3; 13) dans le temps soit faible.

3. Véhicule selon la revendication 1 ou 2,
**caractérisé en ce que**
le dispositif de commande (34) génère en interdépendance les première et seconde applications de force de sorte qu'en cas de déviation du châssis de véhicule (11), une course élastique résiduelle présente par rapport à une course élastique disponible et/ou une course d'amortissement disponible du premier élément à ressort (24) et/ou du premier élément d'amortissement (25) et du second élément à ressort (15) et/ou du second élément d'amortissement (14) soit disponible dans les deux sens de course.

4. Véhicule selon l'une quelconque des revendications précédentes,
**caractérisé par**
au moins un second capteur d'accélération (26) monté sur la cabine de véhicule (12), de préférence mesurant en trois dimensions, pour mesurer une seconde valeur d'accélération d'une accélération de la cabine de véhicule (12).

5. Véhicule selon l'une quelconque des revendications précédentes,
**caractérisé par**
au moins un premier capteur de position (16) monté sur la cabine de véhicule (12) pour mesurer la position momentanée de la cabine (12) du véhicule par rapport au châssis (11) du véhicule.

6. Véhicule selon l'une quelconque des revendications précédentes,
**caractérisé par**
au moins un second capteur de position (32) monté sur le siège de véhicule (13) pour mesurer la position momentanée du siège (13) du véhicule par rapport à la cabine (12) et/ou au châssis (11) du véhicule.

7. Véhicule selon l'une quelconque des revendications précédentes,
**caractérisé en ce que**
tous les capteurs d'accélération (18, 26) et les capteurs de position (16, 32) sont reliés au dispositif de commande (34) au moyen de premières lignes de command (17, 19, 27, 33).

8. Véhicule selon l'une quelconque des revendications précédentes,
**caractérisé en ce que**
le dispositif de commande (34) est relié à des éléments de volume supplémentaire (20, 28) pour activer et/ou désactiver des volumes supplémentaires pour les premier et/ou second éléments à ressort conformés respectivement en coussins d'air (15, 24) au moyen de secondes lignes de commande (23, 31).

9. Procédé de suspension sur ressorts d'un siège de véhicule (3 ; 13) dans une cabine de véhicule (2 ; 12) suspendue sur ressorts, dans lequel le siège de véhicule (3 ; 13) est suspendu sur ressorts au moyen d'au moins un élément à ressort (24) et/ou d'un premier élément d'amortissement (25) par rapport à la cabine de véhicule (2 ; 12) dans le sens de la hauteur et/ou de la longueur et/ou de la largeur du véhicule et la cabine de véhicule (2 ; 12) est suspendue sur ressorts au moyen d'au moins un second élément à ressort (15) et/ou d'un second élément d'amortissement (14) par rapport à un châssis de véhicule (11) dans le sens de la hauteur et/ou de la longueur et/ou de la largeur du véhicule, dans lequel, au moyen d'un dispositif de commande (34), en fonction d'une première valeur d'accélération mesurée d'une déviation du châssis de véhicule (11), il s'effectue une première application de force pour réguler la déviation du premier élément à ressort (24) et/ou du premier élément d'amortissement (25) et une seconde application de force pour réguler la déviation du second élément à ressort (15) et/ou du second élément d'amortissement (15) en interdépendance des déviations des éléments à ressort et/ou des éléments d'amortissement,
**caractérisé en ce que**
au moins un capteur d'accélération (18) pour mesurer la première valeur d'accélération est monté sur le châssis de véhicule (11).
